# EUROPÄISCHE PATENTSCHRIFT

(11) **EP 3 774 480 B1**
(45) Veröffentlichungstag und Bekanntmachung des Hinweises auf die Patenterteilung: **30.03.2022**
(21) Anmeldenummer: 19723678.9
(22) Anmeldetag: 25.04.2019
(51) Int. Cl.: B61C 3/00, B61C 17/00, B61F 1/00

(54) **VARIABLE TRANSFORMATORHALTEEINRICHTUNG FÜR E-LOKS**
VARIABLE TRANSFORMER HOLDING DEVICE FOR ELECTRIC LOCOMOTIVES
DISPOSITIF DE MAINTIEN DE TRANSFORMATEUR VARIABLE POUR DES LOCOMOTIVES ÉLECTRIQUES

(30) Priorität: 15.05.2018 DE 102018207473
(43) Veröffentlichungstag der Anmeldung: 17.02.2021
(73) Patentinhaber: Siemens Mobility GmbH, 81739 München (DE)
(72) Erfinder: STOFF, Helmut, 83627 Warngau (DE)
(86) Internationale Anmeldenummer: PCT/EP2019/060663
(87) Internationale Veröffentlichungsnummer: WO 2019/219344

(56) Entgegenhaltungen:
- WO-A1-2016/139167
- WO-A1-2017/163392
- CN-A- 106 080 623
- DE-A1-102014 113 829
- JP-A- 2007 131 128
- JP-A- 2007 182 208

## Beschreibung

Die Erfindung betrifft eine Transformatorhalteeinrichtung. Überdies betrifft die Erfindung eine Transformatoranordnung. Zudem betrifft die Erfindung eine Elektrolokomotive.

Elektrische Lokomotiven und Diesellokomotiven müssen hinsichtlich ihrer Gewichtsverteilung sehr genau austariert werden, um größere Achslastunterschiede und Radlastunterschiede zu vermeiden. Um dies zu erreichen, werden herkömmlich der Aufbau und die Verteilung der Komponenten der Lokomotiven bereits bei der Konstruktion so gewählt, dass sich ein möglichst mittiger Schwerpunkt einstellt.

Nach der Montage der Lokomotive können dann zu starke Schwerpunktsabweichungen in Längsrichtung, d. h. in x-Richtung, oder quer dazu in y-Richtung nur noch mit Hilfe des Hinzufügens von zusätzlichen Ballastgewichten kompensiert werden, wodurch möglicherweise eine unzulässige Erhöhung des Gesamtgewichts der Lokomotive verursacht wird. Um dies zu verhindern, können punktuell Leichtbaumaßnahmen angewendet werden, was allerdings eine Erhöhung der Baukosten mit sich bringt.

Bei Lokomotiven stellt der Transformator mit einem Gewicht von etwa 15 % der Lokomotivenmasse die größte lokal installierte Einzelmasse der Lokomotive dar. In modernen elektrischen Lokomotiven ist der Transformator zwischen den Drehgestellen im Untergestell befestigt. Die Einbauposition ist herkömmlich fix gewählt und kann, einmal festgelegt, in der Regel auch nicht mehr verändert werden, um Ungleichgewichte auszugleichen.

Es besteht also die Aufgabe, eine Vorrichtung anzugeben, mit der eine vereinfachte Anpassung der Gewichtsverteilung in einer elektrischen Lokomotive ermöglicht wird.

Diese Aufgabe wird durch eine Transformatorhalteeinrichtung gemäß Patentanspruch 1, eine Transformatoranordnung gemäß Patentanspruch 2, und eine Elektrolokomotive gemäß Patentanspruch 3 gelöst.

Die erfindungsgemäße Transformatorhalteeinrichtung für eine Elektrolokomotive mit einem Transformator weist mindestens einen Transformatorträger auf. Der Transformatorträger ist selbst an einem Untergestell der Elektrolokomotive angeordnet und hält den Transformator an einer Position in der Elektrolokomotive. Der Transformatorträger ist dazu eingerichtet, dass der Transformator der Elektrolokomotive in einem Wartungsbetrieb relativ zu dem Untergestell verschiebbar ist, um eine vorbestimmte Schwerpunktsposition der Elektrolokomotive zu erreichen. Zur Herstellung der Verschiebbarkeit ist zumindest ein Teilelement des Transformatorträgers in einem ersten Zustand verschiebbar. Die Verschiebung des mindestens einen Teilelements erfolgt dabei vorzugsweise relativ zu dem Untergestell der Elektrolokomotive. Die Verschiebung des Teilelements kann dabei relativ zu nicht verschiebbaren Teilelementen des Transformatorträgers erfolgen. Weiterhin ist der Transformatorträger derart ausgebildet, dass der Transformator an dem Untergestell der Elektrolokomotive während des Betriebs fixiert ist. Zur Herstellung der Fixierung ist das mindestens eine verschiebbare Teilelement in einen fixierten Zustand überführbar ausgebildet.

Vorteilhaft kann eine ideale Schwerpunktslage der Elektrolokomotive ohne Zusatzmassen nachträglich eingestellt und verändert werden. Darüber hinaus lässt sich mit Hilfe der erfindungsgemäßen Transformatorhalteeinrichtung Gewicht einsparen, da zusätzliche Ballastgewichte zur Schwerpunktskorrektur nicht benötigt werden oder zumindest reduziert werden können. Weiterhin können aufwändige Maßnahmen zum Leichtbau von Lomokotiven vermieden werden, mit denen herkömmlich Ballastgewichte ausgeglichen werden. Aufgrund der auch nach Fertigstellung einer Lokomotive möglichen Verschiebbarkeit des Transformators kann der Schwerpunkt zu einem späten Zeitpunkt korrigiert werden, ohne Strukturen der Lokomotive, beispielswiese durch Leichtbau, ändern zu müssen. Auf diese Weise wird das Projekt zur Fertigstellung der Lokomotive planungssicherer. Überdies wird die Verfügbarkeit einer Vielzahl von Ausstattungsvarianten erleichert, da eine durch eine geänderte Ausstattung bedingte Schwerpunktsverlagerung ohne zusätzlich konstruktive Maßnahmen einfach durch eine Verschiebung des Transformators ausgeglichen werden kann.

Die erfindungsgemäße Transformatoranordnung für eine Elektrolokomotive weist einen Transformator auf. Weiterhin umfasst die erfindungsgemäße Transformatoranordnung auch eine Transformatorhalteeinrichtung zur verschiebbaren Fixierung des Transformators an einem Untergestell der Elektrolokomotive. Die erfindungsgemäße Transformatoranordnung teilt die Vorteile der erfindungsgemäßen Transformatorhalteeinrichtung.

Die erfindungsgemäße Elektrolokomotive weist die erfindungsgemäße Transformatoranordnung auf. Die erfindungsgemäße Elektrolokomotive teilt die Vorteile der erfindungsgemäßen Transformatoranordnung.

Die abhängigen Ansprüche sowie die nachfolgende Beschreibung enthalten jeweils besonders vorteilhafte Ausgestaltungen und Weiterbildungen der Erfindung.

Der mindestens eine Transformatorträger ist dazu eingerichtet, dass der Transformator in Längsrichtung verschiebbar ist. Auf diese Weise können Unterschiede zwischen Achslasten verschiedener Achsen reduziert werden.

Zusätzlich ist der mindestens eine Transformatorträger dazu eingerichtet, dass der Transformator in Querrichtung verschiebbar ist. Vorteilhaft kann eine ungleiche Belastung von an derselben Längsposition angeordneten Rädern vermieden werden.

Bei der erfindungsgemäßen Transformatorhalteeinrichtung weist der mindestens eine Transformatorträger mindestens einen Halter auf, der an einem Lokomotivenlängsträger oder einem Lokomotivenquerträger der Elektrolokomotive befestigt ist, und mindestens eine Trafopratze, welche zwischen dem Transformator und dem mindestens einen Halter angeordnet ist und relativ zu dem Halter in Längsrichtung und in Querrichtung im Wartungsbetrieb verschiebbar ist. Vorteilhaft kann eine Verbindung zwischen dem Halter und der Trafopratze verschiebbar ausgestaltet werden und damit eine einfache Schwerpunktsverlagerung erlauben.

Die erfindungsgemäße Transformatorhalteeinrichtung weist weiterhin ein Zwischenelement auf, welches zwischen dem Halter und der Trafopratze angeordnet ist und derart ausgebildet ist, dass die Trafopratze relativ zu dem Halter in Längsrichtung und in Querrichtung im Wartungsbetrieb verschiebbar ist. Vorteilhaft lässt sich eine Verlagerung des Schwerpunkts der Elektrolokomotive durch eine Verschiebung der Zwischenelemente bewerkstelligen.

Das Zwischenelement umfasst eine klemmbare Schwalbenschwanzfixierung . Dabei weist die klemmbare Schwalbenschwanzfixierung mindestens zwei in unterschiedliche Richtungen zueinander verschiebbare Schwalbenschwanzelemente auf. Diese Schwalbenschwanzelemente ermöglichen ein Verschieben des Transformators in Längsrichtung und in Querrichtung. Gleichzeitig kann eine Position des Transformators mit Hilfe der Klemmfunktion der Schwalbenschwanzelemente fixiert werden. Besonders bevorzugt sind die beiden Schwalbenschwanzelemente rechtwinklig zueinander orientiert. Dabei ist eines der beiden Schwalbenschwanzelemente in Längsrichtung der Elektrolokomotive orientiert und das andere Schwalbenschwanzelement in Querrichtung der Elektrolokomotive orientiert. In diesem Fall lässt sich eine besonders einfache Schwerpunktsveränderung entlang der Hauptachsen der Elektrolokomotive durchführen. Zudem kann in diesem Fall eine Anordnung der Schwalbenschwanzelemente parallel zum Längsträger bzw. senkrecht dazu erfolgen, was besonders einfach zu realisieren ist.

Die Erfindung wird im Folgenden unter Hinweis auf die beigefügten Figuren anhand von Ausführungsbeispielen noch einmal näher erläutert. Es zeigen:
- FIG 1: eine schematische Querschnittsdarstellung einer Transformatorhalteeinrichtung gemäß einem Ausführungsbeispiel der Erfindung,
- FIG 2: eine schematische perspektivische Darstellung der in FIG 1 gezeigten Transformatorhalteeinrichtung,
- FIG 3: eine schematische Draufsicht auf die in FIG 1 und FIG 2 veranschaulichte Transformatorhalteeinrichtung,
- FIG 4: eine schematische Querschnittsdarstellung einer Transformatorhalteeinrichtung gemäß einem zweiten Ausführungsbeispiel der Erfindung,
- FIG 5: eine schematische perspektivische Darstellung der in FIG 4 gezeigten Transformatorhalteeinrichtung,
- FIG 6: eine schematische Draufsicht auf die in FIG 4 und FIG 5 veranschaulichte Transformatorhalteeinrichtung,
- FIG 7: ein Flussdiagramm, welches ein Verfahren zum Positionieren eines Transformators in einer Elektrolokomotive gemäß einem Ausführungsbeispiel der Erfindung veranschaulicht.

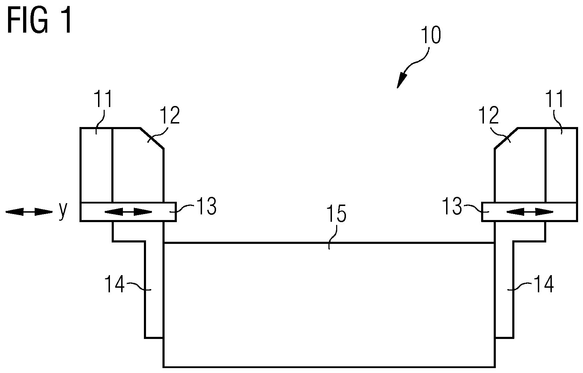

In FIG 1 ist eine Querschnittsansicht einer Transformatorhalteeinrichtung 10 gemäß einem ersten Ausführungsbeispiel der Erfindung veranschaulicht. Die Transformatorhalteeinrichtung 10 ist Teil einer Elektrolokomotive (nicht gezeigt) und ist dazu eingerichtet, einen Transformator 15 der Elektrolokomotive in Position zu halten. Die Transformatorhalteeinrichtung 10 umfasst zwei Lok-Längsträger 11, welche Teil eines Untergestells der Elektrolokomotive sind. Die Lok-Längsträger 11 sind in FIG 1 jeweils am rechten und am linken Bildrand zu erkennen und bilden die Aufhängung für die übrigen Elemente der Transformatorhalteeinrichtung 10. An den beiden Lok-Längsträgern 11 sind jeweils zwei Halter 12 seitlich angeschweißt. Insgesamt sind also vier Halter 12 an den beiden Lok-Längsträgern 11 fest angeordnet, von denen in FIG 1 nur zwei Lok-Längsträger 11 zu erkennen sind.

An der Unterseite der Halter 12 ist jeweils eine Zwischenplatte 13 angeschraubt. Die Schraubverbindungen zwischen den Haltern 12 und der Zwischenplatte 13 sind derart, dass die Zwischenplatten in x-Richtung, d. h. in Längsrichtung, und in y-Richtung, d. h. in Querrichtung, verschiebbar sind, wenn die Schrauben gelöst werden. An den Unterseiten der Zwischenplatten 13 ist jeweils eine rechtwinklig geformte Trafopratze 14 festgeschraubt. Die Trafopratzen 14 weisen jeweils einen kurzen und einen langen Schenkel auf. Der kurze Schenkel ist jeweils mit der Unterseite der Zwischenplatte 13 verschraubt und der längere Schenkel ist an der Schmalseite des Transformators 15 fixiert. Da die Zwischenplatten 13 in x-Richtung und in y-Richtung verschiebbar sind, kann der Transformator 15 in einem Wartungsbetrieb verschoben werden, um eine vorbestimmte Schwerpunktsposition der Elektrolokomotive einzustellen. Alternativ kann auch einfach eine Bohrung in der Zwischenplatte 13 an einer gewünschten Position vorgenommen werden und die Trafopratzen 14 können entsprechend der Position der neuen Bohrung in x-Richtung und in y-Richtung verschoben werden, ohne dass die Zwischenplatte verschoben wird. Während des Betriebs ist der Transformator 15 an dem Untergestell 11 der Elektrolokomotive fest fixiert, wobei in diesem Zustand die Zwischenplatten mit den Haltern 12 und den Trafopratzen 14 fest verschraubt sind.

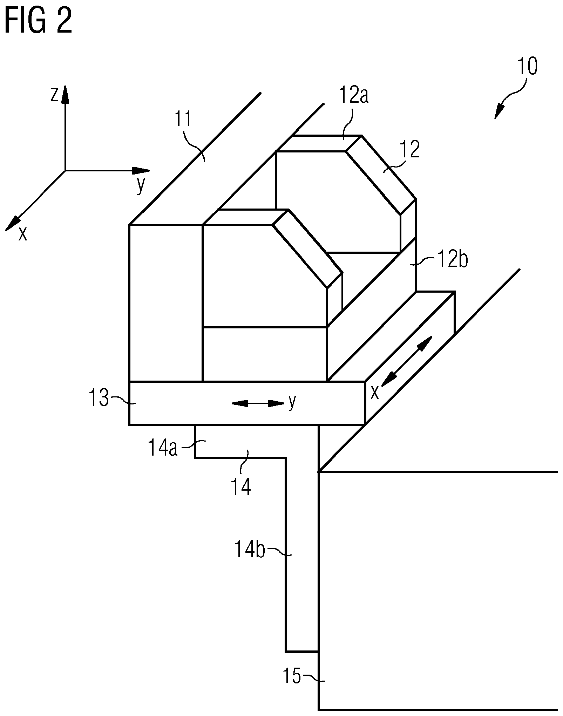

In FIG 2 ist ein Teil der in FIG 1 gezeigten Transformatorhalteeinrichtung 10 perspektivisch veranschaulicht. Wie in FIG 2 zu erkennen ist, weisen die an den Lok-Längsträgern 11 montierten Halter 12 jeweils zwei in der y-z-Ebene verlaufende Schenkel 12a auf, die an dem jeweiligen Lok-Längsträger 11 festgeschweißt sind. Teil der Halter 12 ist auch jeweils ein in der x-y-Ebene verlaufender flacher, quaderförmiger Bereich 12b, der mit seiner langen Schmalseite an dem jeweiligen Lok-Längsträger 11 festgeschweißt ist und dessen breite Unterseite jeweils mit einer bereits in FIG 1 gezeigten Zwischenplatte 13 (nur eine Zwischenplatte ist in FIG 2 dargestellt) verschraubt ist. Wie in FIG 2 zu erkennen, lässt sich die Zwischenplatte 13 in x-Richtung und in y-Richtung verschieben, wenn die Schrauben gelöst sind. Ein solcher Verschiebungsvorgang kann zur Einstellung einer vorbestimmten Schwerpunktsposition in der E-Lokomotive genutzt werden. An der Unterseite der Zwischenplatten 13 ist jeweils eine Trafopratze 14 mit ihrem kurzen Schenkel 14a montiert. Mit ihrem langen Schenkel 14b ist die Trafopratze an dem Transformator 15 fixiert.

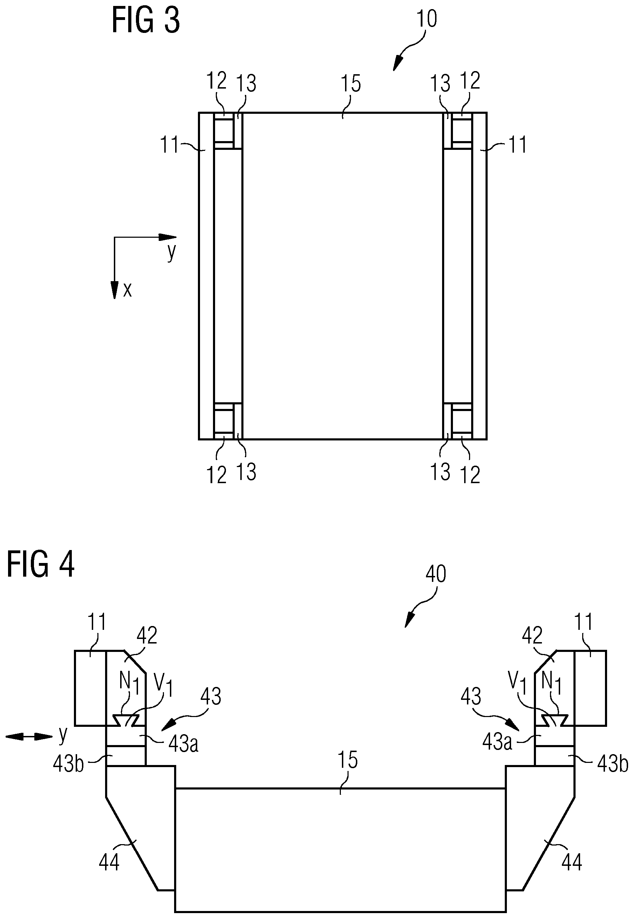

In FIG 3 ist eine Draufsicht der in FIG 1 und FIG 2 veranschaulichten Transformatorhalteeinrichtung 10 gezeigt. Wie in FIG 3 zu erkennen ist, weist die Transformatorhalteeinrichtung 10 zwei Lok-Längsträger 11 auf, an denen jeweils zwei Halter 12 angeschweißt sind. Die Halter 12 sind wiederum mit den bereits erwähnten Zwischenplatten 13 (insgesamt sind es vier Zwischenplatten) verschraubt, die jeweils mit einer Trafopratze 14 (in FIG 3 nicht gezeigt) verbunden sind. Wie bereits erwähnt, ist zwischen den Trafopratzen 14 der Transformator 15 der E-Lokomotive fixiert.

In FIG 4 ist eine schematische Querschnittsdarstellung einer Transformatorhalteeinrichtung 40 einer E-Lokomotive gemäß einem zweiten Ausführungsbeispiel der Erfindung veranschaulicht. Die Transformatorhalteeinrichtung 40 weist ebenso wie die in FIG 1 gezeigte Transformatorhalteeinrichtung 10 zwei Lok-Längsträger 11 auf, welche Teil eines Untergestells der Elektro-Lokomotive sind. Die Lok-Längsträger 11 sind in FIG 4 jeweils am rechten und am linken Bildrand zu erkennen und bilden die Aufhängung für die übrigen Elemente der Transformatorhalteeinrichtung 40.

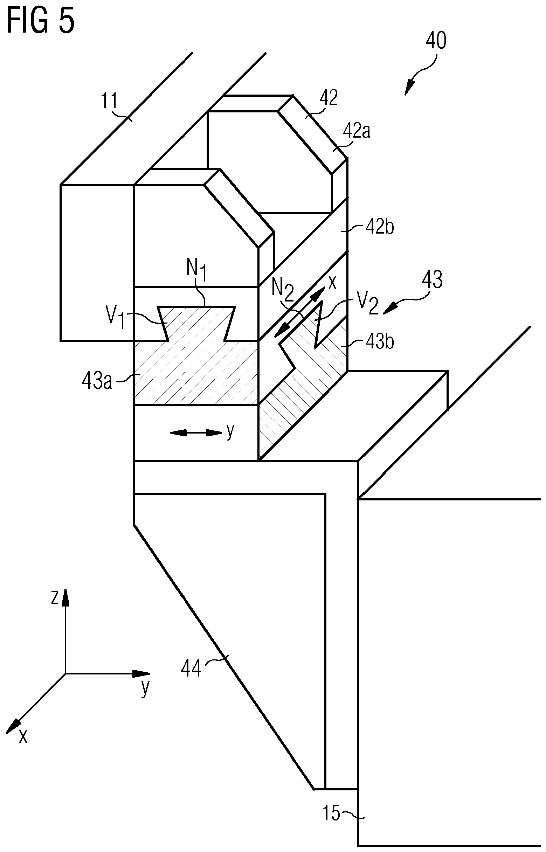

An den beiden Lok-Längsträgern 11 sind jeweils zwei Halter 42 seitlich angeschweißt. Insgesamt sind also vier Halter 42 an den Lok-Längsträgern 11 fest angeordnet, von denen in FIG 4 nur zwei Lok-Längsträger 11 zu erkennen sind. Die Halter 42 sind allerdings an ihrer Unterseite im Vergleich zu den in FIG 1 gezeigten Haltern 12 unterschiedlich ausgebildet. Wie in FIG 4 zu erkennen ist, weisen die Halter 42 eine in Längsrichtung bzw. in x-Richtung verlaufende nutartige Aussparung N₁ auf. In diese nutartige Aussparung N₁ greift ein erstes Schwalbenschwanz-Teilelement 43a einer Schwalbenschwanzführung 43 mit einem Vorsprung V₁ ein. Das erste Schwalbenschwanz-Teilelement 43a ist in x-Richtung verschiebbar (siehe auch FIG 5) und wird nach einer Verschiebung an einer vorbestimmten Position an dem Halter 42 durch Reibschluss und Kraftschluss festgeklemmt. Ein zweites Schwalbenschwanz-Teilelement 43b ist an der Unterseite des ersten Schwalbenschwanz-Teilelements 43a festgeklemmt und lässt sich in y-Richtung verschieben (siehe FIG 5).

Hierfür ist an der Unterseite des ersten Schwalbenschwanz-Teilelements 43a wiederum eine allerdings diesmal in y-Richtung bzw. in Querrichtung verlaufende nutartige Aussparung N₂ (siehe FIG 5) ausgebildet, in die ein korrespondierender Vorsprung V₂ (siehe FIG 5) eingreift. Das zweite Schwalbenschwanz-Teilelement 43b lässt sich in y-Richtung relativ zu dem ersten Schwalbenschwanz-Teilelement 43a verschieben. An der jeweiligen Unterseite der zweiten Schwalbenschwanz-Teilelemente 43b ist jeweils eine Trafopratze 44 mit ihrer schmalen Seite fest fixiert. An den Trafopratzen 44 wiederum ist der Transformator 15 der E-Lokomotive fest fixiert. Als Oberseite soll in der Anmeldung eine in positiver z-Richtung nach oben hin orientierte Seite bzw. Fläche verstanden werden. Als Unterseite soll eine in der dazu entgegengesetzten Richtung orientierte Seite bzw. Fläche verstanden werden.

In FIG 5 ist ein Teil der in FIG 4 gezeigten Transformatorhalteeinrichtung 40 perspektivisch veranschaulicht. Wie in FIG 5 zu erkennen ist, weisen die an den Lok-Längsträgern 11 montierten Halter 42 jeweils zwei in der y-z-Ebene verlaufende Schenkel 42a auf, die an dem jeweiligen Lok-Längsträger 11 festgeschweißt sind. Teil der Halter 42 ist auch jeweils ein in der x-y-Ebene verlaufender flacher, quaderförmiger Bereich 42b, der mit seiner langen Schmalseite an dem jeweiligen Lok-Längsträger 11 festgeschweißt ist und dessen breite Unterseite jeweils mit einem bereits in FIG 5 gezeigten ersten Schwalbenschwanz-Teilelement 43a über eine Nut-Feder-Verbindung verbunden ist.

Dabei weist der quaderförmige Bereich 42b, wie bereits im Zusammenhang mit FIG 4 erwähnt, eine nutartige Aussparung N₁ auf, welche in Längsrichtung der E-Lokomotive, also in x-Richtung verläuft. In die nutartige Aussparung N₁ greift, wie bereits im Zusammenhang mit FIG 4 erwähnt, ein schwalbenschwanzförmig ausgebildeter Vorsprung V₁ des ersten Schwalbenschwanz-Teilelements 43a (in FIG 5 schraffiert markiert) ein, der mit letzterer eine Klemmverbindung bildet. Wie bereits erwähnt, lässt sich das erste Schwalbenschwanz-Teilelement 43a relativ zu dem Halter 42 in x-Richtung verschieben. Um eine Verschiebung des Transformators 15 auch in y-Richtung zu ermöglichen, ist an der Unterseite des ersten Schwalbenschwanz-Teilelements 43a ein zweites Schwalbenschwanz-Teilelement 43b angeordnet, das, wie bereits ebenfalls angedeutet, mit dem ersten Schwalbenschwanz-Teilelement über eine schwalbenschwanzförmige Nut-Feder-Verbindung in y-Richtung verschiebbar verbunden ist. Hierzu weist das erste Schwalbenschwanz-Teilelement 43a an seiner Unterseite eine in y-Richtung, d. h. in Querrichtung verlaufende Nut N₂ auf, in die ein von dem zweiten Schwalbenschwanz-Teilelement 43b gebildeter schwalbenschwanzförmiger Vorsprung V₂ (schraffiert markiert) eingreift. Wie bereits erwähnt, ist an der Unterseite des zweiten schwalbenschwanzförmigen Teilelements 43b jeweils eine Trafopratze 44 mit ihrer schmalen Seite fest fixiert. An den Trafopratzen 44 wiederum ist der Transformator 15 der E-Lokomotive fest fixiert.

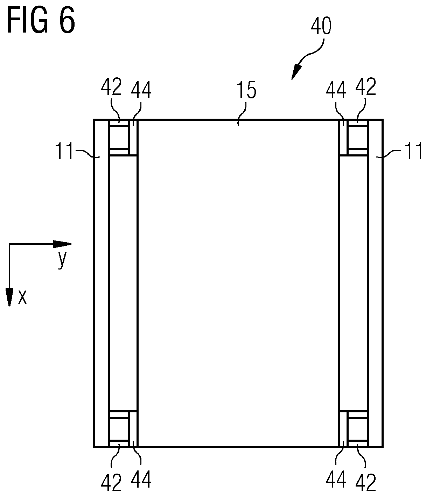

In FIG 6 ist eine Draufsicht der in FIG 4 und FIG 5 gezeigten Transformatorhalteeinrichtung 40 veranschaulicht. Die in FIG 6 gezeigte Draufsicht ähnelt der in FIG 3 gezeigten Draufsicht. So sind ähnlich wie bei der in FIG 3 gezeigten Draufsicht zwei Lok-Längsträger 11 zu erkennen, an denen jeweils zwei Halter 42 angeschweißt sind. Die Halter 42 sind allerdings bei dem zweiten Ausführungsbeispiel mit der im Zusammenhang mit FIG 4 und FIG 5 beschriebenen Schwalbenschwanzführung 43 verbunden. Die Schwalbenschwanzelemente 43 sind in der in FIG 6 gezeigten Draufsicht jedoch nicht erkennbar, da sie sich unterhalb der Halter 42 befinden. Dafür sind im Gegensatz zu FIG 3 in FIG 6 die Trafopratzen 44 zu erkennen, die sich von oben betrachtet zwischen den Haltern 42 und dem Transformator 15 der Elektro-Lokomotive befinden.

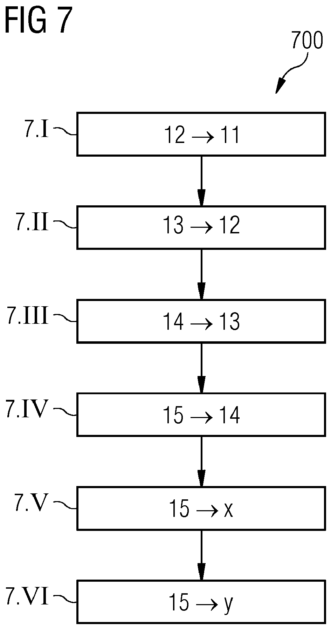

In FIG 7 ist ein Flussdiagramm 700 gezeigt, welches ein Verfahren zum Montieren eines Transformators in einer Elektrolokomotive gemäß einem Ausführungsbeispiel der Erfindung veranschaulicht.

Bei dem Schritt 7.I werden zunächst vier Halter 12 an den zwei Lok-Längsträgern 11 festgeschweißt. Anschließend wird bei dem Schritt 7.II eine Zwischenplatte 13 an einem jeweiligen Halter 12 in einer vorbestimmten x-y-Position festgeschraubt. An der Unterseite der Zwischenplatte 13 wird bei dem Schritt 7. III jeweils eine Trafopratze 14 mit ihrem kurzen Schenkel fixiert. Weiterhin wird bei dem Schritt 7.IV der Transformator 15 mit seinen beiden langen Schmalseiten zwischen den langen Schenkeln der Trafopratze 14 befestigt. Schließlich erfolgt noch der eigentliche Justagevorgang, bei welchem bei dem Schritt 7.V zunächst die Zwischenplatte 13 nach einem Lösen der Befestigungsschrauben in x-Richtung verschoben wird, bis die x-Komponente des Schwerpunkts der E-Lokomotive genau in der Mitte ist. Weiterhin wird bei dem Schritt 7.VI noch die Zwischenplatte in y-Richtung verschoben, um die y-Komponente des Schwerpunkts der E-Lokomotive an eine vorbestimmte Position zu verschieben. Alternativ kann auch einfach eine Bohrung in der Zwischenplatte 13 an einer gewünschten Position vorgenommen werden und die Trafopratze 14 entsprechend der Position der neuen Bohrung in x-Richtung und in y-Richtung verschoben werden, ohne dass die Zwischenplatte verschoben wird. Schließlich werden die Schrauben der Zwischenplatte 13 festgezogen und damit der Trafo in der justierten Position fixiert.

Es wird abschließend noch einmal darauf hingewiesen, dass es sich bei den vorbeschriebenen Vorrichtungen lediglich um bevorzugte Ausführungsbeispiele der Erfindung handelt und dass die Erfindung vom Fachmann variiert werden kann, ohne den Bereich der Ansprüche zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Transformatorhalteeinrichtung (10, 40) für eine Elektrolokomotive mit einem Transformator, aufweisend:
- mindestens einen Transformatorträger (11, 12, 13, 14, 42, 43, 44), welcher dazu eingerichtet ist,
- dass der Transformator (15) an einem Untergestell (11) der Elektrolokomotive in einem Wartungsbetrieb verschiebbar ist, um eine vorbestimmte Schwerpunktsposition der Elektrolokomotive zu erreichen,
- und der Transformator (15) an dem Untergestell (11) der Elektrolokomotive während des Betriebs fixiert ist,
- bei der der mindestens eine Transformatorträger (11, 12, 13, 14, 42, 43, 44) aufweist:
- mindestens einen Halter (12, 42), der an einem Lokomotivenlängsträger (11) oder einem Lokomotivenquerträger der Elektrolokomotive befestigbar ist,
- eine Trafopratze (14, 44), welche zwischen dem Transformator (15) und dem Halter (12, 42) anordenbar ist und relativ zu dem Halter (12, 42) in Längsrichtung und in Querrichtung im Wartungsbetrieb verschiebbar ist,
**dadurch gekennzeichnet,**
- **dass** ein Zwischenelement (13, 43) zwischen dem Halter (12, 42) und der Trafopratze (14, 44) angeordnet und derart ausgebildet ist, dass die Trafopratze relativ zu dem Halter (12, 42) in Längsrichtung und in Querrichtung im Wartungsbetrieb verschiebbar ist,
- **dass** das Zwischenelement (43) eine klemmbare Schwalbenschwanzfixierung (43) umfasst, und
- **dass** die klemmbare Schwalbenschwanzfixierung (43) mindestens zwei in unterschiedliche Richtungen zueinander verschiebbare Schwalbenschwanzelemente (43a, 43b) aufweist.

2. Transformatoranordnung für eine Elektrolokomotive, **dadurch gekennzeichnet, dass** diese
- einen Transformator (15) aufweist und
- eine Transformatorhalteeinrichtung (10, 40) nach Anspruch 1 zur verschiebbaren Fixierung des Transformators (15) an einem Untergestell der Elektrolokomotive aufweist.

3. Elektrolokomotive, **dadurch gekennzeichnet, dass** diese eine Transformatoranordnung nach Anspruch 2 aufweist.

## Claims

1. Transformer holding device (10, 40) for an electric locomotive having a transformer, comprising:
- at least one transformer support (11, 12, 13, 14, 42, 43, 44) which is designed to the effect
- that the transformer (15) can be displaced on an underframe (11) of the electric locomotive in a maintenance operation in order to achieve a predetermined center of gravity position of the electric locomotive,
- and the transformer (15) is fixed to the underframe (11) of the electric locomotive during operation,
- in which the at least one transformer support (11, 12, 13, 14, 42, 43, 44) comprises:
- at least one holder (12, 42) which can be fastened to a locomotive longitudinal member (11) or a locomotive crossmember of the electric locomotive,
- a transformer claw (14, 44) which can be arranged between the transformer (15) and the holder (12, 42) and can be displaced relative to the holder (12, 42) in the longitudinal direction and in the transverse direction during a maintenance operation,
**characterized**
- **in that** an intermediate element (13, 43) is arranged between the holder (12, 42) and the transformer claw (14, 44) and is designed in such a way that the transformer claw can be displaced relative to the holder (12, 42) in the longitudinal direction and in the transverse direction in a maintenance operation,
- **in that** the intermediate element (43) comprises a clampable dovetail fixing (43), and
- **in that** the clampable dovetail fixing (43) comprises at least two dovetail elements (43a, 43b) which are displaceable in different directions with respect to one another.

2. Transformer arrangement for an electric locomotive, **characterized in that** it
- comprises a transformer (15), and
- comprises a transformer holding device (10, 40) according to Claim 1 for displaceably fixing the transformer (15) to an underframe of the electric locomotive.

3. Electric locomotive, **characterized in that** it comprises a transformer arrangement according to Claim 2.

## Revendications

1. Dispositif de maintien de transformateur (10, 40) pour une locomotive électrique comprenant un transformateur, présentant :
- au moins un porte-transformateur (11, 12, 13, 14, 42, 43, 44) qui est équipé pour
- que le transformateur (15) puisse être mobile sur un châssis (11) de la locomotive électrique dans un fonctionnement en maintenance pour obtenir une position de centre de gravité prédéterminée de la locomotive électrique,
- et que le transformateur (15) soit fixé sur le châssis (11) de la locomotive électrique pendant le fonctionnement,
- dans lequel l'au moins un porte-transformateur (11, 12, 13, 14, 42, 43, 44) présente :
- au moins un support (12, 42) qui peut être fixé sur un support longitudinal de locomotive (11) ou un support transversal de locomotive de la locomotive électrique,
- une griffe de transformateur (14, 44) qui peut être agencée entre le transformateur (15) et le support (12, 42) et mobile par rapport au support (12, 42) dans le sens longitudinal et le sens transversal en fonctionnement en maintenance,
**caractérisé en ce**
**qu'**un élément intermédiaire (13, 43) est disposé entre le support (12, 42) et la griffe de transformateur (14, 44) et est ainsi conçu que la griffe de transformateur est mobile par rapport au support (12, 42) dans le sens longitudinal et le sens transversal en fonctionnement en maintenance,
**que** l'élément intermédiaire (43) comprend une fixation en queue d'aronde (43) pouvant être pincée, et
**que** la fixation en queue d'aronde (43) pouvant être pincée présente au moins deux éléments en queue d'aronde (43a, 43b) mobiles entre eux dans des directions différentes.

2. Agencement de transformateur pour une locomotive électrique, **caractérisé en ce que** celui-ci
- présente un transformateur (15) et
- un dispositif de maintien de transformateur (10, 40) selon la revendication 1, pour la fixation mobile du transformateur (15) sur un châssis de la locomotive électrique.

3. Locomotive électrique, **caractérisée en ce que** celle-ci présente un agencement de transformateur selon la revendication 2.
